# EUROPEAN PATENT SPECIFICATION

(11) **EP 3 889 044 B1**
(45) Date of publication and mention of the grant of the patent: **29.05.2024**
(21) Application number: 21166275.4
(22) Date of filing: 31.03.2021
(51) Int. Cl.: B64U 10/13, B64U 30/20, B64C 39/02

(54) **MULTI-ROTOR AIRCRAFT WITH MULTI-SHAFT DISLOCATION LAYOUT**
MEHRROTORFLUGZEUG MIT MEHRWELLENVERSETZUNGSANORDNUNG
AÉRONEF À ROTORS MULTIPLES AVEC AGENCEMENT DE DISLOCATION À ARBRES MULTIPLES

(30) Priority: 31.03.2020 CN 202010247049
(43) Date of publication of application: 06.10.2021
(73) Proprietor: Shandong Dingfeng Aviation Technology Co., Ltd., 272000 Jining City (CN)
(72) Inventor: TIAN, Yu, Shanghai, 201615 (CN)
(74) Representative: MERH-IP Matias Erny Reichl Hoffmann Patentanwälte PartG mbB

(56) References cited:
- EP-A1- 3 243 747
- WO-A1-2018/172815
- WO-A1-2019/114884
- CN-U- 204 568 059
- CN-U- 206 278 267
- GB-A- 2 529 896

## Description

### TECHNICAL FIELD

The present disclosure relates to the technical field of multi-rotor aircrafts, in particular to an inner-cobweb-like compact-structured multi-rotor aircraft with multi-shaft dislocation layout.

### BACKGROUND

The most common multi-axis rotor aircraft in the prior art is of 4-shaft 8-propeller and 8-shaft 8-propeller designs. There are various frame structures such as an X type, an H type, and a Y type according to different design requirements and layout conditions.

A 4-shaft 8-propeller multi-rotor aircraft is of a coaxial design. Power shafts of motors corresponding to four propeller blades on the upper layer and power shafts of motors corresponding to four propeller blades on the lower layer are collinear in a one-to-one correspondence manner. A propeller blade pitch between the upper and lower propeller blades is smaller. The upper and lower propeller blades overlap in a projection direction, so that the propeller efficiency is lower. In addition, in this multi-rotor aircraft, a frame is of a cantilever structure, so that the rigidity of a fuselage is poor.

An 8-shaft 8-propeller multi-rotor aircraft is of a non-coaxial design. The eight propeller blades are arranged at intervals on the same plane. The aircraft is larger in overall size, larger in volume, heavier and higher in flight resistance. In addition, similar to the 4-shaft 8-propeller multi-rotor aircraft, the frame of this multi-rotor aircraft is also of a cantilever structure, so that the rigidity of the fuselage is also poor. CN 206 278 267 U relates to a multi-rotor UAV featuring a frame with a cantilever structure, where there must not be any difference between lateral and longitudinal extension of the drone to be provided with a new propeller-motor-configuration, as CN 206 278 267 U teaches to mandatorily leave the basic circular propeller arrangement unchanged and only to increase the diameter of the blades, for which the staggered propeller configuration is an enabling precondition. CN 204 568 059 U relates to a multi-axis aircraft rotor arrangement structure. GB 2 529 896 A relates to an air ducting structure for multirotor-type UAVs. WO 2019/ 114 884 A1 relates to a modular vertical take-off and landing aircraft having a flight module and a transport module. WO 2018/ 172 815 A1 relates to multicopter frames for ensuring optimal modulus of elasticity, having first set of arms whose peripheral end connects with peripheral ends of two adjacent arms of second set of arms by rods.

For a multi-rotor aircraft with a high loading requirement, such as 10-shaft and 12-shaft aircrafts, propeller blades are usually arranged at equal intervals in the prior art, and centers of the propeller blades are located on the same circle along the projection direction. In such setting, in order to meet the increasing loading requirements, the following two methods are usually used: (1) enlarging the aircraft proportionally, that is, increasing the length of a force arm (an arm connecting the propeller blades and the center of the frame) and increasing the wheel base; (2) increasing the number of force arms, that is, increasing the number of propeller blades. Due to equal-interval arrangement, in order to prevent collisions between the propeller blades, the volume of the multi-rotor aircraft is usually relatively large. The above two methods will inevitably increase the volume and weight of the aircraft a lot.

In addition, in the projection direction, a plurality of propeller blades are arranged on the same circle. The transportation of the aircraft will be more inconvenient when the volume of the aircraft becomes larger and larger to cause conventional transportation equipment cannot be used for transportation.

In summary, the multi-rotor aircraft in the prior art has the disadvantages of high flight resistance, large volume, poor fuselage rigidity, and low propeller efficiency under the same loading capacity.

### SUMMARY

The technical problem to be solved in the present disclosure is to overcome the disadvantages that a multi-rotor aircraft in the prior art has high flight resistance, large volume and low propeller efficiency under the same loading capacity, and provide a multi-rotor aircraft with multi-shaft dislocation layout.

The present disclosure solves the above technical problems through the following technical solutions:

A multi-rotor aircraft with multi-shaft dislocation layout includes a frame, a plurality of upper-layer power sources and a same plurality of lower-layer power sources. The multi-rotor aircraft further includes:
a plurality of upper-layer propeller blades, the plurality of upper-layer propeller blades being disposed at intervals and being connected to the upper side of the frame through the plurality of upper-layer power sources on the upper side of the frame; and
a plurality of lower-layer propeller blades, the plurality of lower-layer propeller blades being disposed at intervals and being connected to the lower side of the frame through the plurality of lower-layer power sources on the lower side of the frame;
the plurality of upper-layer propeller blades and the plurality of lower-layer propeller blades are staggered along a projection direction of the frame;
the centers of the plurality of upper-layer propeller blades and the centers of the plurality of lower-layer propeller blades are axisymmetrically located on the same flat geometric figure, namely a rectangle or an ellipse, along the horizontal projection direction of the frame.

In this solution, the upper-layer propeller blades and the lower-layer propeller blades are staggered, so that a propeller blade pitch between the upper-layer propeller blades and the lower-layer propeller blades is relatively large; the central axis of the upper-layer power sources and the central axis of the lower-layer power sources are not collinear or do not overlap; and the upper-layer propeller blades and the lower-layer propeller blades have a relatively small overlap area in the projection direction of the frame. Compared with a 4-shaft 8-propeller coaxial multi-rotor aircraft in the prior art, the multi-rotor aircraft with multi-shaft dislocation layout is that the upper-layer propeller blades and the lower-layer propeller blades have a relatively large vertical height difference and generate a relatively low mutual disturbance, and the propeller efficiency is higher; and a correspondingly required propeller rotation speed is lower, and the noise is lower. Compared with an 8-shaft 8-propeller multi-rotor aircraft in the prior art, the multi-rotor aircraft with multi-shaft dislocation layout is that the overall size is greatly reduced, and the weight, the volume and the flight resistance of the fuselage are also obviously reduced.

In addition, the centers of the upper-layer propeller blades and the centers of the lower-layer propeller blades are located on the flat geometric figure along the projection direction of the frame. That is, a lateral length of the multi-rotor aircraft is greater than a longitudinal length. In case of a high loading requirement, the multi-rotor aircraft does not need to be enlarged proportionally, but the number of shafts can be increased from the center of the frame to a corresponding narrower section in the flat geometric figure. For example, an 8-shaft multi-rotor aircraft is changed into a 10-shaft or 12-shaft multi-rotor aircraft to meet the loading requirement, which has less influence on the volume and weight of the multi-rotor aircraft. In addition, the centers of the upper-layer propeller blades and the centers of the lower-layer propeller blades are located on the flat geometric figure, so that the multi-rotor aircraft has a relatively low requirement for transportation equipment, and is convenient to transport.

In summary, compared with the multi-rotor aircraft in the prior art, the present disclosure is that on the one hand, under the same loading capacity, the flight resistance and the volume of the multi-rotor aircraft with multi-shaft dislocation layout are obviously reduced, and the propeller efficiency is improved; on the other hand, the multi-rotor aircraft can meet a higher loading requirement in the case of less influence on the volume and weight of the multi-rotor aircraft, and the multi-rotor aircraft has a relatively low requirement for transportation equipment.

The centers of the plurality of upper-layer propeller blades and the centers of the plurality of lower-layer propeller blades are located on the same rectangle or ellipse along the horizontal projection direction of the frame.

An overlap area between any adjacent upper-layer propeller blade and lower-layer propeller blade is equal to an axisymmetrically located overlap area between another adjacent upper-layer propeller blade and lower-layer propeller blade along the projection direction of the frame.

In this solution, for any two groups of adjacent upper-layer propeller blades and lower-layer propeller blades, the overlap areas of the upper-layer propeller blades and the lower-layer propeller blades are equal, so that a lift generated by any upper-layer propeller blades and the axisymmetrically located lower-layer propeller blades in a lift system of the multi-rotor aircraft is the same, which is conductive to guaranteeing the performance of the multi-rotor aircraft. On the basis that the centers of the upper-layer propeller blades and the centers of the lower-layer propeller blades are located on the same flat geometric figure, if the overlap areas of the upper-layer propeller blades and the lower-layer propeller blades are equal, a plurality of included angles encircled between the plurality of upper-layer propeller blades and the plurality of lower-layer propeller blades (included angles are encircled between the adjacent upper-layer propeller blades and lower-layer propeller blades) are not completely the same, that is, the plurality of upper-layer propeller blades and the plurality of lower-layer propeller blades are disposed at unequal intervals.

Preferably, at least five upper-layer propeller blades and at least five lower-layer propeller blades are provided.

Preferably, a dislocation angle is formed between a connecting line of the center of any upper-layer propeller blade and the center of the adjacent lower-layer propeller blade and a horizontal plane of the frame, and the dislocation angle ranges from 0 to 89 degrees.

In this solution, by the adoption of the above setting, the relative positions of the upper-layer propeller blades and the lower-layer propeller blades can be adjusted according to loading and layout requirements.

Preferably, the frame includes:
a frame center portion;
a plurality of connecting arms, the connecting arms having first ends and second ends along an extending direction, the first ends of the plurality of connecting arm being connected to the frame center portion, and the second ends of the plurality of connecting arms being correspondingly connected with the plurality of upper-layer power sources, the plurality of upper-layer propeller blades, the plurality of lower-layer power sources and the plurality of lower-layer propeller blades; and
at least one reinforcing arm, an accommodating region being formed between the second ends of any two adjacent connecting arms, and at least one of the accommodating regions formed between the plurality of connecting arms being provided with each reinforcing arm.

In this solution, by the adoption of the above setting, the corresponding connecting arms are no longer of the cantilever structure due to the arrangement of the reinforcing arms, but the reinforcing arms and the adjacent connecting arms can encircle a structure similar to a triangle to facilitate improving the rigidity of the fuselage and reducing vibration generated by deformation of the aircraft.

Preferably, the connecting arms are detachably connected or fixedly connected to the reinforcing arms and the frame center portion to form an integrated structure;
or, the connecting arms are integrated with the reinforcing arms and the frame center portion.

In this solution, the integrated structure is convenient for fast assembling of the aircraft. By the adoption of integration, connecting structures are eliminated, so that a relatively tedious connecting process is eliminated, and it is conductive to reducing the overall weight of the aircraft and then reducing the flight resistance of the aircraft.

Preferably, the multi-motor aircraft includes an upper-layer component and a lower-layer component which are detachably connected;
the upper-layer component includes the frame, the plurality of upper-layer propeller blades, the plurality of upper-layer power sources, the plurality of lower-layer propeller blades, the plurality of lower-layer power sources and an energy load module; the energy load module is used to supply power to the upper-layer power source and the lower-layer power source; the energy load module is connected to the upper side of the frame;
the lower-layer component includes an undercarriage and a load; and the undercarriage and the load are connected to the lower side of the frame.

In this solution, by the adoption of the above setting, the multi-rotor aircraft mainly includes the upper-layer component and the lower-layer component. On the one hand, the upper-layer component and the lower-layer component can be transported independently, so that a requirement for transportation conditions are relatively low; on the other hand, after the upper-layer component and the lower-layer component are connected together, more convenient and faster assembling of the multi-rotor aircraft can be realized, which is conductive to reducing the preparatory work before take-off and improving the fast reaction performance of the multi-rotor aircraft. In this solution, the energy load module and the frame are assembled together and arranged above the frame.

Modifications, combinations or changes may be made without departing from the invention, which is defined by the appended claims.

The present disclosure has positive progressive results:
In the multi-rotor aircraft with multi-shaft dislocation layout, the upper-layer propeller blades and the lower-layer propeller blades are staggered, so that a propeller blade pitch between the upper-layer propeller blades and the lower-layer propeller blades is relatively large; the central axis of the upper-layer power sources and the central axis of the lower-layer power sources are not collinear or do not overlap; and the upper-layer propeller blades and the lower-layer propeller blades have a relatively small overlap area in the projection direction of the frame. Compared with the multi-rotor aircraft in the prior art, the multi-rotor aircraft with multi-shaft dislocation layout can apparently reduce the flight resistance and volume under the same loading capacity, and improve the propeller efficiency. In addition, all the propeller blades of the multi-rotor aircraft are located on the same flat geometric figure in the projection direction, so that the multi-rotor aircraft can meet a higher loading requirement in the case of less affecting the volume and weight of the multi-rotor aircraft, and the multi-rotor aircraft has a relatively low requirement for transportation equipment.

### BRIEF DESCRIPTION OF THE DRAWINGS

FIG. 1 is a schematic structural diagram of a multi-rotor aircraft with multi-shaft dislocation layout of Embodiment 1 of the present disclosure.
FIG. 2 is another schematic structural diagram of a multi-rotor aircraft with multi-shaft dislocation layout of Embodiment 1 of the present disclosure.
FIG. 3 is a schematic structural diagram of a multi-rotor aircraft with multi-shaft dislocation layout of Embodiment 2 of the present disclosure.

Descriptions of numerals in the drawings:
10: frame
101: frame center portion
102: connecting arm
103: reinforcing arm
20: upper-layer power source
30: lower-layer power source
40: upper-layer propeller blade
50: lower-layer propeller blade

### DESCRIPTION OF THE EMBODIMENTS

The present disclosure will be further described below in a manner of embodiments.

### Embodiment 1

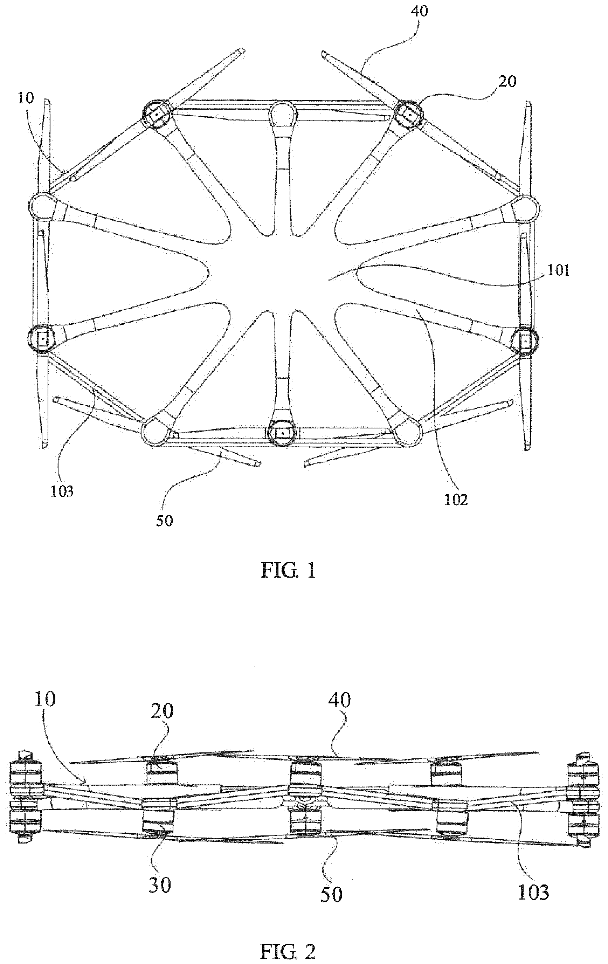

The present embodiment discloses a multi-rotor aircraft with multi-shaft dislocation layout. As shown in Figs. 1 to 2, the multi-rotor aircraft includes a frame 10, a plurality of upper-layer power sources 20, a plurality of lower-layer power sources 30, a plurality of upper-layer propeller blades 40 and a plurality of lower-layer propeller blades 50. The plurality of upper-layer propeller blades 40 are disposed at intervals, and are connected to the upper side of the frame 10 through the plurality of upper-layer power sources 20. The plurality of lower-layer propeller blades 50 are disposed at intervals, and are connected to the lower side of the frame 10 through the plurality of lower-layer power sources 30. The plurality of upper-layer propeller blades 40 and the plurality of lower-layer propeller blades 50 are staggered along a projection direction of the frame 10. The centers of the plurality of upper-layer propeller blades 40 and the centers of the plurality of lower-layer propeller blades 50 are located on the same flat geometric figure along the projection direction of the frame 10. The above-mentioned projection direction is a horizontal projection direction, and corresponds to a top view direction of the frame 10.

In this implementation mode, the upper-layer propeller blades 40 and the lower-layer propeller blades 50 are staggered, so that a propeller blade pitch between the upper-layer propeller blades 40 and the lower-layer propeller blades 50 is relatively large; the central axis of the upper-layer power sources 20 and the central axis of the lower-layer power sources 30 are not collinear or do not overlap; and the upper-layer propeller blades 40 and the lower-layer propeller blades 50 have a relatively small overlap area in the projection direction of the frame 10. Compared with a 4-shaft 8-propeller coaxial multi-rotor aircraft in the prior art, the multi-rotor aircraft with multi-shaft dislocation layout is that the upper-layer propeller blades 40 and the lower-layer propeller blades 50 have a relatively large vertical height difference and generate a relatively low mutual disturbance, and the propeller efficiency is higher; and a correspondingly required propeller rotation speed is lower, and the noise is lower. Compared with an 8-shaft 8-propeller multi-rotor aircraft in the prior art, the multi-rotor aircraft with multi-shaft dislocation layout is that the overall size is greatly reduced, and the weight, the volume and the flight resistance of the fuselage are also obviously reduced. Compared with the multi-rotor aircraft in the prior art, the multi-rotor aircraft with multi-shaft dislocation layout can apparently reduce the flight resistance and volume under the same loading capacity, and improve the propeller efficiency.

In addition, the centers of the upper-layer propeller blades 40 and the centers of the lower-layer propeller blades 50 are located on the flat geometric figure along the projection direction of the frame 10. That is, a lateral length of the multi-rotor aircraft is greater than a longitudinal length. In case of a high loading requirement, the multi-rotor aircraft does not need to be enlarged proportionally, but the number of shafts can be increased from the center of the frame 10 to a corresponding narrower section in the flat geometric figure. For example, an 8-shaft multi-rotor aircraft is changed into a 10-shaft or 12-shaft multi-rotor aircraft to meet the loading requirement, which has less influence on the volume and weight of the multi-rotor aircraft. In addition, the centers of the upper-layer propeller blades 40 and the centers of the lower-layer propeller blades 50 are located on the flat geometric figure, so that the multi-rotor aircraft has a relatively low requirement for transportation equipment, and is convenient to transport.

In summary, compared with the multi-rotor aircraft in the prior art, the present disclosure is that on the one hand, under the same loading capacity, the flight resistance and volume of the multi-rotor aircraft with multi-shaft dislocation layout are obviously reduced, and the propeller efficiency is improved; on the other hand, the multi-rotor aircraft with multi-shaft dislocation layout can meet a higher loading requirement in the case of less influence on the volume and weight of the multi-rotor aircraft, and the multi-rotor aircraft has a relatively low requirement for transportation equipment.

In this implementation mode, the above-mentioned geometric figure is an axisymmetric figure. In such setting, the multi-rotor aircraft is convenient to manufacture and assemble. Specifically, in this implementation mode, the centers of the plurality of upper-layer propeller blades 40 and the centers of the plurality of lower-layer propeller blades 50 are located on the same rectangle along the projection direction of the frame.

In other replaceable implementation modes, the centers of the plurality of upper-layer propeller blades 40 and the centers of the plurality of lower-layer propeller blades 50 may also be located on other flat geometric figures, such as the same ellipse.

In this implementation mode, an overlap area between any adjacent upper-layer propeller blade 40 and lower-layer propeller blade 50 is equal to an overlap area between another adjacent upper-layer propeller blade 40 and lower-layer propeller blade 50 along the projection direction of the frame 10.

For any two groups of adjacent upper-layer propeller blades 40 and lower-layer propeller blades 50, the overlap areas of the upper-layer propeller blades 40 and the lower-layer propeller blades 50 are equal, so that a lift generated by each propeller blade (the upper-layer propeller blade 40 or the lower-layer propeller blade 50) in a lift system of the multi-rotor aircraft is the same, which is conductive to guaranteeing the performance of the multi-rotor aircraft. That is, the multi-rotor aircraft can meet a higher loading requirement on the basis of guaranteeing the performance and in the case of less influence on the volume and weight of the multi-rotor aircraft.

As mentioned above, on the basis that the centers of the upper-layer propeller blades 40 and the centers of the lower-layer propeller blades 50 are located on the same flat geometric figure, if the overlap areas of the upper-layer propeller blades 40 and the lower-layer propeller blades 50 are equal, a plurality of included angles encircled between the plurality of upper-layer propeller blades 40 and the plurality of lower-layer propeller blades 50 (included angles are encircled between the adjacent upper-layer propeller blades and lower-layer propeller blades) are not completely the same along the projection direction of the frame 10, that is, the plurality of upper-layer propeller blades 40 and the plurality of lower-layer propeller blades 50 are disposed at unequal intervals.

It should be noted that in this implementation mode, the upper-layer power sources 20 and the lower-layer power sources 30 are motors. In other replaceable implementation modes, other types of power sources can also be used according to an actual need.

In addition, in this implementation mode, as shown in Figs. 1 to 2, there are five upper-layer propeller blades 40 and five lower-layer propeller blades 50; and correspondingly, there are also five upper-layer power sources 20 and five lower-layer power sources 30. That is, the multi-rotor aircraft in the present embodiment is a 10-shaft 10-propeller aircraft. In other replaceable implementation modes, the upper-layer propeller blades 40, the lower-layer propeller blades 50, the upper-layer power sources 20 and the lower-layer power sources 30 may also be set in other quantities according to actual loading and layout needs.

Referring to Fig. 1 and Fig. 2 for understanding, a dislocation angle is formed between a connecting line of the center of any upper-layer propeller blade 40 and the center of the adjacent lower-layer propeller blade 50 and a horizontal plane of the frame 10, and the dislocation angle ranges from 0 to 89 degrees. By the adoption of the above setting, the relative positions of the upper-layer propeller blades 40 and the lower-layer propeller blades 50 can be adjusted according to a layout requirement.

Continuing to refer to Fig. 1 and Fig. 2 for understanding, connecting lines of the center of any lower-layer propeller blade 50 and the centers of two upper-layer propeller blades 40 adjacent thereto encircle a triangle. By the adoption of the above setting, it is conductive to reducing the overall size of the multi-rotor aircraft on the basis of guaranteeing certain propeller efficiency, and then conductive to reducing the weight and volume of the multi-rotor aircraft.

As shown in Figs. 1 to 2, the frame 10 includes a frame center portion 101, a plurality of connecting arms 102 and at least one reinforcing arm 103. The connecting arms 102 have first ends and second ends along an extending direction; the first ends of the plurality of connecting arm 102 are connected to the frame center portion 101, and the second ends of the plurality of connecting arms 102 are correspondingly connected with the plurality of upper-layer power sources 20, the plurality of upper-layer propeller blades 40, the plurality of lower-layer power sources 30 and the plurality of lower-layer propeller blades 50. An accommodating region is formed between the second ends of any two adjacent connecting arms 102, and at least one of the accommodating regions formed between the plurality of connecting arms 102 is provided with each reinforcing arm 103.

The corresponding connecting arms 102 are no longer of a cantilever structure due to the arrangement of the reinforcing arms 103, but the reinforcing arms and the adjacent connecting arms 102 can encircle a structure similar to a triangle to facilitate improving the rigidity of the fuselage and reducing vibration generated by deformation of the aircraft.

Specifically, in this implementation mode, all the accommodating regions formed between the plurality of connecting arms 102 are provided with the reinforcing arms 103. All the connecting arms 102 are no longer of the cantilever structure under the action of the reinforcing arms 103, which is conductive to significantly improving the rigidity of the fuselage, so that the vibration generated by the deformation of the aircraft can be significantly reduced.

In this implementation mode, the connecting arms 102, the reinforcing arms 103 and the frame center portion 101 are integrated. In such setting, connecting structures are eliminated, so that a relatively tedious connecting process is eliminated, and it is conductive to reducing the overall weight of the aircraft and then reducing the flight resistance of the aircraft.

It should be noted that in other replaceable implementation modes, the connecting arms 102 may also be detachably connected or fixedly connected to the reinforcing arms 103 and the frame center portion 101 to form an integrated structure. In such setting, fast assembling of the aircraft is convenient to realize.

Continuing to refer to Figs. 1 to 2 for understanding, the upper-layer propeller blades 40 and the upper-layer power sources 20 are connected to the top portions of the corresponding connecting arms 102, and the lower-layer propeller blades 50 and the lower-layer power sources 30 are connected to the bottom portions of the corresponding connecting arms 102. On the basis of ensuring that the upper-layer propeller blades 40 and the lower-layer propeller blades 50 are staggered, such setting can enable the aircraft to be disposed more compactly, which is conductive to further reducing the overall volume of the aircraft.

In this implementation mode, the multi-motor aircraft includes an upper-layer component and a lower-layer component which are detachably connected. The upper-layer component includes the frame 10, the plurality of upper-layer propeller blades 40, the plurality of upper-layer power sources 20, the plurality of lower-layer propeller blades 50 and the plurality of lower-layer power sources 30. The lower-layer component includes an undercarriage (not shown) and an operating load unit which are connected to each other; the operating load unit includes a load (not shown) and an energy load module (not shown); the energy load module is used to supply power to the upper-layer power sources 20 and the lower-layer power sources 30; the load and the undercarriage are connected to the energy load module; and the energy load module is detachably connected to the lower side of the frame 10.

What is specifically the load is determined according to the use of the multi-rotor aircraft. The load may be a fire extinguishing bomb or may be other materials such as pesticide. The energy load module may be a battery.

By the adoption of the above setting, the multi-rotor aircraft mainly includes the upper-layer component and the lower-layer component. On the one hand, the upper-layer component and the lower-layer component can be transported independently, so that a requirement for transportation conditions are relatively low; on the other hand, after the upper-layer component and the lower-layer component are connected together, more convenient and faster assembling of the multi-rotor aircraft can be realized, which is conductive to reducing the preparatory work before take-off and improving the fast reaction performance of the multi-rotor aircraft. The energy load module and the undercarriage are assembled together and arranged below the frame 10.

Those used to connect the plurality of upper-layer propeller blades 40 from among the plurality of connecting arms 102 are first connecting arms, and those used to connect the plurality of lower-layer propeller blades 50 from among the plurality of connecting arms 102 are second connecting arms. An edge of the energy load module extends to the plurality of first connecting arms and are detachably connected to the plurality of first connecting arms. If the energy load module is relatively large in size, when it needs to extend to a position corresponding to the connecting arms 102, the energy load module is connected to the connecting arms 102, and the connection is relatively convenient and reliable. In addition, compared with connection of the energy load module to the second connecting arms, the connection of the energy load module to the first connecting arms is conductive to avoiding interference between the energy load module and the lower-layer propeller blades 50, conductive to protecting the lower-layer propeller blades 50, and then conductive to improving the reliability of the multi-rotor aircraft.

In other replaceable implementation modes, the energy load module may also be assembled together with the frame 10, and is arranged above the frame 10. At this time, the multi-motor aircraft includes an upper-layer component and a lower-layer component which are detachably connected. The upper-layer component includes the frame 10, the plurality of upper-layer propeller blades 40, the plurality of upper-layer power sources 20, the plurality of lower-layer propeller blades 50, the plurality of lower-layer power sources 30 and an energy load module; the energy load module is used to supply power to the upper-layer power sources 20 and the lower-layer power sources 30; and the energy load module is connected to the upper side of the frame 10. The lower-layer component includes an undercarriage and a load; and the undercarriage and the load are connected to the lower side of the frame 10.

In the multi-rotor aircraft with multi-shaft dislocation layout, the upper-layer propeller blades 40 and the lower-layer propeller blades 50 are staggered, so that a propeller blade pitch between the upper-layer propeller blades 40 and the lower-layer propeller blades 50 is relatively large; the central axis of the upper-layer power sources 20 and the central axis of the lower-layer power sources 30 are not collinear or do not overlap; and the upper-layer propeller blades 40 and the lower-layer propeller blades 50 have a relatively small overlap area in the projection direction of the frame 10. Compared with a 4-shaft 8-propeller coaxial multi-rotor aircraft in the prior art, the multi-rotor aircraft with multi-shaft dislocation layout is that the upper-layer propeller blades 40 and the lower-layer propeller blades 50 have a relatively large vertical height difference and generate a relatively low mutual disturbance, and the propeller efficiency is higher; and a correspondingly required propeller rotation speed is lower, and the noise is lower. Compared with an 8-shaft 8-propeller multi-rotor aircraft in the prior art, the multi-rotor aircraft with multi-shaft dislocation layout is that the overall size is greatly reduced, and the weight, the volume and the flight resistance of the fuselage are also obviously reduced.

In addition, compared with 4-shaft 8-propeller and 8-shaft 8-propeller multi-rotor aircrafts, the multi-rotor aircraft with multi-shaft dislocation layout is that the frame 10 is no longer of a cantilever structure, so that the rigidity of the fuselage can also be improved, and the vibration generated by the deformation of the aircraft can be reduced. Compared with the multi-rotor aircraft in the prior art, the multi-rotor aircraft with multi-shaft dislocation layout can apparently reduce the flight resistance and volume under the same loading capacity, and improve the propeller efficiency and the rigidity of the fuselage.

In addition, as mentioned above, along the projection direction of the frame 10, the centers of the plurality of upper-layer propeller blades 40 and the centers of the plurality of lower-layer propeller blades 50 are located on the same rectangle, and the overlap area between any adjacent upper-layer propeller blade 40 and lower-layer propeller blade 50 is equal to an overlap area between another adjacent upper-layer propeller blade 40 and lower-layer propeller blade 50, so that the multi-rotor aircraft can meet a higher loading requirement on the basis of guaranteeing the performance and in the case of less influence on the volume and weight of the multi-rotor aircraft; and the multi-rotor aircraft has a relatively low requirement for transportation equipment.

### Embodiment 2

The structure of the multi-rotor aircraft with multi-shaft dislocation layout in the present embodiment is basically the same as the structure of the multi-rotor aircraft with multi-shaft dislocation layout in Embodiment 1, but mainly differs in the number of propeller blades and the number of power sources. The identical numerals in the present embodiment and Embodiment 1 refer to the same elements.

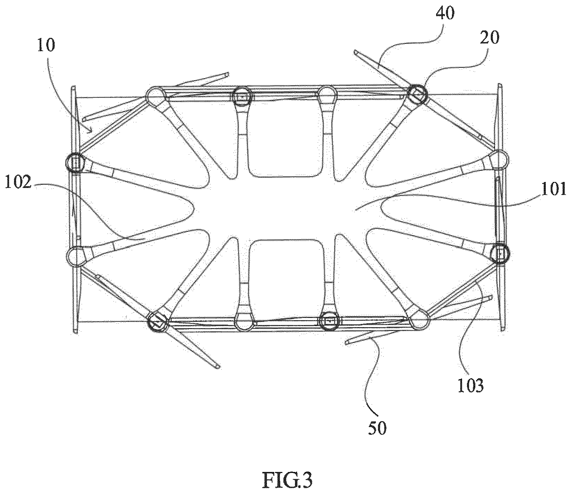

As shown in Fig. 3, there are six upper-layer propeller blades 40 and six lower-layer propeller blades 50; and correspondingly, there are also six upper-layer power sources 20 and six lower-layer power sources 30. That is, the multi-rotor aircraft in the present embodiment is a 12-shaft 12-propeller aircraft. Fig. 3 illustrates that the centers of the 12 propeller blades are located on the same rectangle.

Although the specific implementation modes of the present disclosure have been described above, those skilled in the art should understand that this is only an example, and the protection scope of the present disclosure is defined by the appended claims.

## Claims

1. A multi-rotor aircraft with multi-shaft dislocation layout, comprising a frame (10), a plurality of upper-layer power sources (20) and a same plurality of lower-layer power sources (30), the multi-rotor aircraft further comprising:
a plurality of upper-layer propeller blades (40), the plurality of upper-layer propeller blades (40) being disposed at intervals and being connected to the upper side of the frame (10) through the plurality of upper-layer power sources (20) on the upper side of the frame (10); and
a plurality of lower-layer propeller blades (50), the plurality of lower-layer propeller blades (50) being disposed at intervals and being connected to the lower side of the frame (10) through the plurality of lower-layer power sources (30) on the lower side of the frame (10);
wherein the plurality of upper-layer propeller blades (40) and the plurality of lower-layer propeller blades (50) are staggered along a projection direction of the frame (10);
the centers of the plurality of upper-layer propeller blades (40) and the centers of the plurality of lower-layer propeller blades (50) are axisymmetrically located on the same rectangle or ellipse along the horizontal projection direction of the frame (10);
a lateral length of the multi-rotor aircraft is greater than a longitudinal length of the multi-rotor aircraft; and
an overlap area between any adjacent upper-layer propeller blade (40) and lower-layer propeller blade (50) is equal to an axisymmetrically located overlap area between another adjacent upper-layer propeller blade (40) and lower-layer propeller blade (50) along the horizontal projection direction of the frame (10), so that a lift generated by any upper-layer propeller blade (40) and the axisymmetrically located lower-layer propeller blade (50) in a lift system of the multi-rotor aircraft is the same.

2. The multi-rotor aircraft with multi-shaft dislocation layout according to claim 1, wherein at least five upper-layer propeller blades (40) and at least five lower-layer propeller blades (50) are provided.

3. The multi-rotor aircraft with multi-shaft dislocation layout according to claim 1, wherein a dislocation angle is formed between a connecting line of the center of any upper-layer propeller blade (40) and the center of the adjacent lower-layer propeller blade (50) and a horizontal plane of the frame (10), and the dislocation angle ranges from 0 to 89 degrees.

4. The multi-rotor aircraft with multi-shaft dislocation layout according to claim 1, wherein the frame (10) comprises:
a frame center portion (101);
a plurality of connecting arms (102), the connecting arms (102) having first ends and second ends along an extending direction, the first ends of the plurality of connecting arm (102) being connected to the frame center portion (101), and the second ends of the plurality of connecting arms (102) being correspondingly connected with the plurality of upper-layer power sources (20), the plurality of upper-layer propeller blades (40), the plurality of lower-layer power sources (30) and the plurality of lower-layer propeller blades (50); and
at least one reinforcing arm (103), an accommodating region being formed between the second ends of any two adjacent connecting arms (102), and at least one of the accommodating regions formed between the plurality of connecting arms (102) being provided with each reinforcing arm (103).

5. The multi-rotor aircraft with multi-shaft dislocation layout according to claim 4, wherein the connecting arms (102) are detachably connected or fixedly connected to the reinforcing arms (103) and the frame center portion (101) to form an integrated structure;
or, the connecting arms (102) are integrated with the reinforcing arms (103) and the frame center portion (101).

6. The multi-rotor aircraft with multi-shaft dislocation layout according to any one of claims 1 to 5, wherein the multi-rotor aircraft comprises an upper-layer component and a lower-layer component which are detachably connected to each other;
wherein the upper-layer component comprises the frame (10), the plurality of upper-layer propeller blades (40), the plurality of upper-layer power sources (20), the plurality of lower-layer propeller blades (50) and the plurality of lower-layer power sources (30);
the lower-layer component comprises an undercarriage and an operating load unit which are connected to each other; the operating load unit comprises a load and an energy load module; the energy load module is used to supply power to the upper-layer power sources (20) and the lower-layer power sources (30); the load and the undercarriage are connected to the energy load module; and the energy load module is detachably connected to the lower side of the frame (10).

7. The multi-rotor aircraft with multi-shaft dislocation layout according to any one of claims 1 to 5, wherein the multi-rotor aircraft comprises an upper-layer component and a lower-layer component which are detachably connected to each other;
wherein the upper-layer component comprises the frame (10), the plurality of upper-layer propeller blades (40), the plurality of upper-layer power sources (20), the plurality of lower-layer propeller blades (50), the plurality of lower-layer power sources (30) and an energy load module; the energy load module is used to supply power to the upper-layer power source (20) and the lower-layer power source (30); the energy load module is connected to the upper side of the frame (10);
the lower-layer component comprises an undercarriage and a load; and the undercarriage and the load are connected to the lower side of the frame (10).

## Patentansprüche

1. Mehrrotorluftfahrzeug mit einem Mehrwellenverlagerungslayout, das einen Rahmen (10), mehrere Leistungsquellen (20) einer oberen Schicht und ebenso viele Leistungsquellen (30) einer unteren Schicht umfasst, wobei das Mehrrotorluftfahrzeug ferner Folgendes umfasst:
mehrere Propellerflügel (40) einer oberen Schicht, wobei die mehreren Propellerflügel (40) einer oberen Schicht in Intervallen angeordnet sind und mit der Oberseite des Rahmens (10) über die mehreren Leistungsquellen (20) einer oberen Schicht auf der Oberseite des Rahmens (10) verbunden sind; und
mehrere Propellerflügel (50) einer unteren Schicht, wobei die mehreren Propellerflügel (50) einer unteren Schicht in Intervallen angeordnet sind und mit der Unterseite des Rahmens (10) über die mehreren Leistungsquellen (30) einer unteren Schicht auf der Unterseite des Rahmens (10) verbunden sind; wobei
die mehreren Propellerflügel (40) einer oberen Schicht und die mehreren Propellerflügel (50) einer unteren Schicht in einer Projektionsrichtung des Rahmens (10) gestaffelt sind;
die Zentren der mehreren Propellerflügel (40) einer oberen Schicht und die Zentren der mehreren Propellerflügel (50) einer unteren Schicht an demselben Rechteck oder derselben Ellipse in der horizontalen Projektionsrichtung des Rahmens (10) achsensymmetrisch angeordnet sind;
eine Querlänge des Mehrrotorluftfahrzeugs größer ist als eine Längslänge des Mehrrotorluftfahrzeugs und
eine Überlappungsfläche zwischen einem benachbarten Propellerflügel (40) einer oberen Schicht und einem Propellerflügel (50) einer unteren Schicht gleich einer achsensymmetrisch angeordneten Überlappungsfläche zwischen einem weiteren benachbarten Propellerflügel (40) einer oberen Schicht und einem Propellerflügel (50) einer unteren Schicht in der horizontalen Projektionsrichtung des Rahmens (10) ist, derart, dass ein Hub, der durch einen Propellerflügel (40) einer oberen Schicht und den achsensymmetrisch angeordneten Propellerflügel (50) einer unteren Schicht in einem Hubsystem des Mehrrotorluftfahrzeugs erzeugt wird, gleich ist.

2. Mehrrotorluftfahrzeug mit einem Mehrwellenverlagerungslayout nach Anspruch 1, wobei mindestens fünf Propellerflügel (40) einer oberen Schicht und mindestens fünf Propellerflügel (50) einer unteren Schicht vorgesehen sind.

3. Mehrrotorluftfahrzeug mit einem Mehrwellenverlagerungslayout nach Anspruch 1, wobei ein Verlagerungswinkel zwischen einer Verbindungslinie des Zentrums eines Propellerflügels (40) einer oberen Schicht und des Zentrums des benachbarten Propellerflügels (50) einer unteren Schicht und einer Horizontalebene des Rahmens (10) gebildet ist und der Verlagerungswinkel im Bereich von 0 bis 89 Grad liegt.

4. Mehrrotorluftfahrzeug mit einem Mehrwellenverlagerungslayout nach Anspruch 1, wobei der Rahmen (10) Folgendes umfasst:
einen Rahmenzentrumsabschnitt (101);
mehrere Verbindungsarme (102), wobei die Verbindungsarme (102) erste Enden und zweite Enden in einer Ausdehnungsrichtung aufweisen, die ersten Enden der mehreren Verbindungsarme (102) mit dem Rahmenzentrumsabschnitt (101) verbunden sind und die zweiten Enden der mehreren Verbindungsarme (102) entsprechend mit den mehreren Leistungsquellen (20) einer oberen Schicht, den mehreren Propellerflügeln (40) einer oberen Schicht, den mehreren Leistungsquellen (30) einer unteren Schicht und den mehreren Propellerflügeln (50) einer unteren Schicht verbunden sind; und
mindestens einen Verstärkungsarm (103), wobei ein Aufnahmebereich zwischen den zweiten Enden von zwei beliebigen benachbarten Verbindungsarmen (102) gebildet ist und mindestens einer der Aufnahmebereiche, die zwischen den mehreren Verbindungsarmen (102) gebildet sind, mit jedem Verstärkungsarm (103) versehen ist.

5. Mehrrotorluftfahrzeug mit einem Mehrwellenverlagerungslayout nach Anspruch 4, wobei die Verbindungsarme (102) mit den Verstärkungsarmen (103) und dem Rahmenzentrumsabschnitt (101) lösbar verbunden oder fest verbunden sind, um eine integrierte Struktur zu bilden; oder
die Verbindungsarme (102) einteilig mit den Verstärkungsarmen (103) und dem Rahmenzentrumsabschnitt (101) ausgebildet sind.

6. Mehrrotorluftfahrzeug mit einem Mehrwellenverlagerungslayout nach einem der Ansprüche 1 bis 5, wobei das Mehrrotorluftfahrzeug eine Komponente einer oberen Schicht und eine Komponente einer unteren Schicht, die miteinander lösbar verbunden sind, umfasst; wobei
die Komponente einer oberen Schicht den Rahmen (10), die mehreren Propellerflügel (40) einer oberen Schicht, die mehreren Leistungsquellen (20) einer oberen Schicht, die mehreren Propellerflügel (50) einer unteren Schicht und die mehreren Leistungsquellen (30) einer unteren Schicht umfasst und
die Komponente einer unteren Schicht ein Untergestell und eine Betriebslasteinheit umfasst, die miteinander verbunden sind; die Betriebslasteinheit eine Last und ein Energielastmodul umfasst; das Energielastmodul verwendet wird, um Leistung zu den Leistungsquellen (20) einer oberen Schicht und den Leistungsquellen (30) einer unteren Schicht zu liefern; die Last und das Untergestell mit dem Energielastmodul verbunden sind und das Energielastmodul mit der Unterseite des Rahmens (10) lösbar verbunden ist.

7. Mehrrotorluftfahrzeug mit einem Mehrwellenverlagerungslayout nach einem der Ansprüche 1 bis 5, wobei das Mehrrotorluftfahrzeug eine Komponente einer oberen Schicht und eine Komponente einer unteren Schicht, die miteinander lösbar verbunden sind, umfasst; wobei
die Komponente einer oberen Schicht den Rahmen (10), die mehreren Propellerflügel (40) einer oberen Schicht, die mehreren Leistungsquellen (20) einer oberen Schicht, die mehreren Propellerflügel (50) einer unteren Schicht, die mehreren Leistungsquellen (30) einer unteren Schicht und ein Energielastmodul umfasst; das Energielastmodul verwendet wird, um eine Leistung zu der Leistungsquellen (20) einer oberen Schicht und der Leistungsquelle (30) einer unteren Schicht zu liefern; und das Energielastmodul mit der Oberseite des Rahmens (10) verbunden ist; und
die Komponente einer unteren Schicht ein Untergestell und eine Last umfasst und das Untergestell und die Last mit der Unterseite des Rahmens (10) verbunden sind.

## Revendications

1. Aéronef multirotor avec configuration de dislocation multi-arbres, comprenant un châssis (10), une pluralité de sources de puissance de couche supérieure (20) et une même pluralité de sources de puissance de couche inférieure (30), l'aéronef multirotor comprenant en outre :
une pluralité de pales d'hélice de couche supérieure (40), la pluralité de pales d'hélice de couche supérieure (40) étant disposées à des intervalles et étant connectées au côté supérieur du châssis (10) par l'intermédiaire de la pluralité de sources de puissance de couche supérieure (20) sur le côté supérieur dudit châssis (10) ; et
une pluralité de pales d'hélice de couche inférieure (50), la pluralité de pales d'hélice de couche inférieure (50) étant disposées à des intervalles et étant connectées au côté inférieur du châssis (10) par l'intermédiaire de la pluralité de sources de puissance de couche inférieure (30) sur le côté inférieur du châssis (10) ;
dans lequel la pluralité de pales d'hélice de couche supérieure (40) et la pluralité de pales d'hélice de couche inférieure (50) sont échelonnées le long d'une direction de projection du châssis (10) ;
les centres de la pluralité de pales d'hélice de couche supérieure (40) et les centres de la pluralité de pales d'hélice de couche inférieure (50) sont situés de manière asymétrique sur le même rectangle ou la même ellipse le long de la direction de projection horizontale du châssis (10) ;
une longueur latérale de l'aéronef multirotor est supérieure à une longueur longitudinale de l'aéronef multirotor ; et
une zone de chevauchement entre une pale d'hélice de couche supérieure quelconque (40) et une pale d'hélice de couche inférieure quelconque (50) adjacentes est égale à une zone de chevauchement située de manière asymétrique entre une autre pale d'hélice de couche supérieure (40) et une autre pale d'hélice de couche inférieure (50) adjacentes le long de la direction de projection horizontale du châssis (10), de telle sorte qu'une sustentation générée par une pale d'hélice de couche supérieure quelconque (40) et la pale d'hélice de couche inférieure située de manière asymétrique (50) dans un système de sustentation de l'aéronef multirotor est la même.

2. Aéronef multirotor avec configuration de dislocation multi-arbres selon la revendication 1, dans lequel il est prévu au moins cinq pales d'hélice de couche supérieure (40) et au moins cinq pales d'hélice de couche inférieure (50).

3. Aéronef multirotor avec configuration de dislocation multi-arbres selon la revendication 1, dans lequel un angle de dislocation est formé entre une ligne de connexion du centre d'une pale d'hélice de couche supérieure quelconque (40) et du centre de la pale d'hélice de couche inférieure adjacente (50) et un plan horizontal du châssis (10), et l'angle de dislocation est dans une plage de 0 à 89 degrés.

4. Aéronef multirotor avec configuration de dislocation multi-arbres selon la revendication 1, dans lequel le châssis (10) comprend :
une portion de centre de châssis (101) ;
une pluralité de bras de connexion (102), les bras de connexion (102) ayant des premières extrémités et des secondes extrémités le long d'une direction d'extension, les premières extrémités de la pluralité de bras d'extension (102) étant connectées à la portion de centre de châssis (101), et les secondes extrémités de la pluralité de bras de connexion (102) étant connectées de manière correspondante à la pluralité de sources de puissance de couche supérieure (20), à la pluralité de pales d'hélice de couche supérieure (40), à la pluralité de sources de puissance de couche inférieure (30) et à la pluralité de pales d'hélice de couche inférieure (50) ; et
au moins un bras de renforcement (103), une région de logement étant formée entre les secondes extrémités de deux bras de connexion adjacents quelconques (102), et l'une au moins des régions de logement formée entre la pluralité de bras de connexion (102) étant dotée de chaque bras de renforcement (103).

5. Aéronef multirotor avec configuration de dislocation multi-arbres selon la revendication 4, dans lequel les bras de connexion (102) sont connectés de manière détachable ou connectés de manière fixe aux bras de renforcement (103) et à la portion de centre de châssis (101) pour former une structure intégrée ;
ou, les bras de connexion (102) sont intégrés avec les bras de renforcement (103) et la portion de centre de châssis (101).

6. Aéronef multirotor avec configuration de dislocation multi-arbres selon l'une quelconque des revendications 1 à 5, dans lequel l'aéronef multirotor comprend un composant de couche supérieure et un composant de couche inférieure qui sont connectés l'un à l'autre de manière détachable ;
dans lequel le composant de couche supérieure comprend le châssis (10), la pluralité de pales d'hélice de couche supérieure (40), la pluralité de sources de puissance de couche supérieure (20), la pluralité de pales d'hélice de couche inférieure (50), et la pluralité de sources de puissance de couche inférieure (30) ;
le composant de couche inférieure comprend une structure formant support et une unité de charge de fonctionnement qui sont connectées l'un à l'autre ; l'unité de charge de fonctionnement comprend une charge ayant un module de charge d'énergie ; le module de charge d'énergie est utilisé pour alimenter une puissance aux sources de puissance de couche supérieure (20) et aux sources de puissance de couche inférieure (30) ; la charge et la structure formant support sont connectées au module de charge d'énergie ; et le module de charge d'énergie est connecté de manière détachable au côté inférieur du châssis (10).

7. Aéronef multirotor avec configuration de dislocation multi-arbres selon l'une quelconque des revendications 1 à 5, dans lequel l'aéronef multirotor comprend un composant de couche supérieure et un composant de couche inférieure qui sont connectés l'un à l'autre de manière détachable ;
dans lequel le composant de couche supérieure comprend le châssis (10), la pluralité de pales d'hélice de couche supérieure (40), la pluralité de sources de puissance de couche supérieure (20), la pluralité de pales d'hélice de couche inférieure (50), la pluralité de sources de puissance de couche inférieure (30) et un module de charge d'énergie ; le module de charge d'énergie est utilisé pour alimenter une puissance à la source de puissance de couche supérieure (20) et à la source de puissance de couche inférieure (30) ; le module de charge énergie est connecté au côté supérieur du châssis (10) ;
le composant de couche inférieure comprend une structure formant support et une charge ; et la structure formant support et la charge sont connectées au côté inférieur du châssis (10).
